# EUROPEAN PATENT SPECIFICATION

(11) **EP 2 107 302 B1**
(45) Date of publication and mention of the grant of the patent: **14.05.2014**
(21) Application number: 08305077.3
(22) Date of filing: 01.04.2008
(51) Int. Cl.: F23C 10/00, F23G 5/033, F23G 5/30

(54) **Process for using a facility for combusting carbonaceous materials and relating facility**
Verfahren zur Verwendung einer Einrichtung zum Verbrennen von kohlenstoffhaltigen Materialien und dazugehörige Einrichtung
Processus d'utilisation d'une installation pour la combustion de matériaux carbonés et installation associée

(43) Date of publication of application: 07.10.2009
(73) Proprietor: Alstom Technology Ltd, 5400 Baden (CH)
(72) Inventor: Maghdissian, Laurent, 94230 Cachan (FR); Semedard, Jean-Claude, 75014 Paris (FR); Gauville, Pierre, 91370 Verrières-le-Buisson (FR); Beal, Corinne, 78960 Voisins Le Bretonneux (FR)

(56) References cited:
- WO-A-2007/104655
- FR-A- 2 850 156
- FR-A- 2 895 413

## Description

The invention relates to a process for using a facility for burning carbonaceous solid materials and relating facility, in order to produce electricity and/or steam. The solid materials can be fossil fuels such as coal, for example, waste or biomass, and they are injected into a combustion chamber, for example a fluidized bed combustion chamber.

Such a facility for burning carbonaceous materials is described in patent document FR 2 850 156. This facility includes a reactor for reducing oxides, a first cyclone, a reactor for oxidizing oxides, a second cyclone, exchangers for controlling temperature of the circulating oxides and exchangers for flue gas heat recovery. In the facility circulate oxides which are reduced and then oxidized in the two reactors. According to this prior art, the solid fuel material is grounded before entering the oxide reduction reactor, and in the case of coal the average particle diameter is less than 500 µm. The oxides are reduced by having them in contact with the fuel which reacts with the oxygen released by the oxides and then oxidized by contact with air which regenerates the oxides. The oxides have a particle size range from 50 to 500 µm and a density from 2000 to 7000 kg/m³.

In fact, for crushing process and hydrodynamic reasons, the average diameter of particles of entering coal is about 300 µm in conventional fluidized bed combustion chambers. This leads to circulating particle diameter of about 150 µm.

This type of facility for combustion of carbonaceous solid materials operating at atmospheric pressure with integrated capture of carbon dioxide does not require any prior air separation. Because of the simplicity and the compactness of this system, the costs of capturing carbon dioxide may be reduced while providing production of steam for generating electricity.

The solid particles at the outlet of the first cyclone associated with the reduction reactor, consisting of oxides particles and of carbonaceous residues, pass through a seal pot and are then directed towards a device for removing the carbonaceous residues. This removal device is fluidized by steam. With this fluidization, the fine and light particles such as the carbonaceous residues may be separated and re-introduced into the reduction reactor, while the denser and larger oxide particles are transferred towards the oxidation reactor.

This removal device which is a separator contains an internal baffle formed with a wall integral with the roof of the separator and leaving a flow space in the bottom of the latter and which forms two compartments on the passage of fluidized solids with a pressure seal provided by the height of the fluidized solids, between the two compartments. The fluidization of each compartment is independently controlled by two steam inlets, in order to obtain the desired velocity field for separating the oxides and the carbonaceous residues in the first compartment as well as the transfer of the oxides into the second compartment. Above the first compartment, a vent brings the carbonaceous residues carried off by steam back towards the reduction reactor.

This separator is a carbon barrier in the facility, essential for capturing carbon dioxide which is a greenhouse gas which should be subject to emission restrictions.

The object of patent document WO 2007/113016 is to increase the yield of this barrier by improving such a separator. By means of the solid separator described in this document, the segregation phenomenon is enhanced, while increasing the time for treating the solid materials in the first compartment and keeping a separator of limited size.

Document FR 2 895 413 discloses an installation for hydrocarbon oil conversion comprising an enclosure in which catalytic cracking of hydrocarbon takes place in the presence of catalyst particles in a fluidized phase, and a regenerator for regenerating the particles by the combustion of coke. This installation does not allow a satisfactory separation of carbonaceous residues and oxides.

The object of the invention is to improve such facility in order that an easier separation of carbonaceous residues and oxides is obtained, and in order to assure that no carbonaceous residues will be sent to the reactor for oxidizing oxides. This is obtained by using non conventional coal particle size in order to lead to a lower efficiency requirement on the carbon separator and then to achieve the carbon dioxide capture.

To do this, the invention relates to a process for using a facility in which circulates at least one oxide which is reduced and then oxidized in each of both reactors and including a first reactor for reducing oxide in which enter a grounded solid fuel material and oxide, a first separation device receiving entrained solids from this reactor for reducing oxide, a carbon separator installed at the outlet of this first separation device in order to send the carbonaceous particles into the reactor for reducing oxide and the oxide into a second reactor for oxidizing oxide and a second separation device receiving entrained solids from this reactor for oxidizing oxide, wherein the average particle diameter of the entering solid fuel material is controlled to be different from the average particle diameter of the entering oxide, with a rate of relating average particle diameters of at least two.

Solid fuel material is preferably coal.
Said oxide can be metal oxide. It can be limestone too.

The metal oxide can be based on iron, nickel, alumina or a mixture thereof.

According to the invention, the average particle diameter of the entering solid fuel material is greater than the average particle diameter of the entering oxide.

The average particle diameter of the entering solid fuel material is preferably equal to about 500 µm.

According to an embodiment not covered by the scope of protection of the invention, the average particle diameter of the entering solid fuel material is smaller than the average particle diameter of the entering oxide.

The reduced size of the solid fuel particles allows more complete and faster combustion. The reactor for reducing oxide can be consequently of smaller size.

Advantageously, the average particle diameter of the entering solid fuel material is equal to about 50 µm.

The invention relates too to a facility for implementing the process, wherein said first separation device is a low efficiency cyclone and that it comprises other separation device connected to the finest particles outlet of this first separation device.

According to a preferred embodiment, the said first separation device has such efficiency that the average particle diameter of the finest particles fraction escaping from this first separation device is about equal to said average particle diameter of the entering solid fuel material.

According to the invention, the other separation device is a separation cyclone.

According to the invention, the said first separation device is a separation cyclone. In an embodiment not covered by the scope of protection of the invention, it can be a mechanical separator by impact too.

The facility can comprise a solid cooling device implemented in between the first separation device and the said other separation cyclone.

The invention is described hereafter in more details with figure which only illustrates preferred embodiments of the invention.

The figure 1 is a schematic view of a facility according to a first embodiment of the invention.

The figure 2 is a schematic view of a facility according to a second embodiment of the invention.

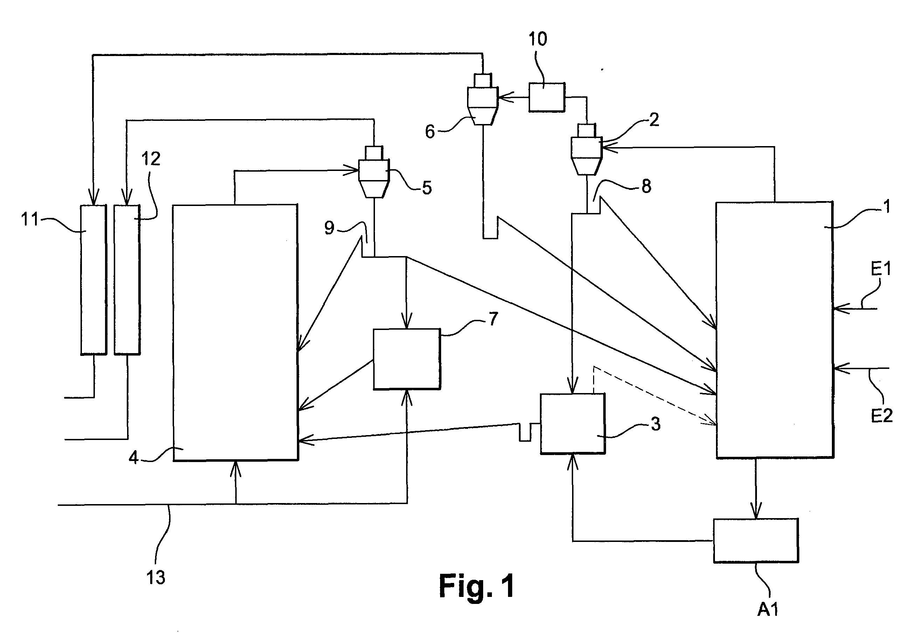

As shown on figure 1, a facility for combusting carbonaceous solid materials, in order to produce electricity and/or steam, according to the invention, in which circulates at least one oxide, preferably a mixture of oxides, advantageously metal oxides, which is reduced and then oxidized, includes a first reactor 1 for reducing oxides in which enter a grounded solid fuel material E1 and oxides E2 , a first separation cyclone 2 feeding with entrained solids from this reactor for reducing oxides, a carbon separator 3 installed at the outlet of this first cyclone in order to send the carbonaceous particles into the reactor for reducing oxides 1 and the oxides into a second reactor 4 for oxidizing oxides fluidized by air 13 and a second separation cyclone 5 feeding with entrained solids from the reactor for oxidizing oxides.

The facility comprises two back pass 11, 12, containing recovery exchangers for the flue gases and for the air, each dedicated to one of the reactors.

According to the invention, the average particle diameter of the entering solid fuel material E1 is controlled to be smaller than the average particle diameter of the entering oxides E2, and more precisely the average particle diameter of the entering solid fuel material E1 is at least twice smaller than the average particle diameter of the entering oxides E2.

Advantageously, the average particle diameter of the entering solid fuel material E1 is equal to about 50 µm and the solid fuel material is preferably coal.

The reactor 1 for reducing oxides is fluidized by a mixture A1 of steam and recycled flue gas. After reduction in the reactor 1 for reducing oxides, the oxides enter the first cyclone 2 in which the solid oxides particles are separated from the carbonaceous residues and the combustion gases, consisting of CO2, SO2 and steam.

According to the invention, the first separation cyclone 2 is a low efficiency cyclone and the facility comprises other separation apparatus 6 of high efficiency connected at the upper outlet of this first cyclone 2 and which is preferably a separation cyclone too.

The first separation cyclone 2 has such efficiency that the average particle diameter of the upper stream escaping from this first separation cyclone is about equal to said average particle diameter of the entering solid fuel material E1 i.e. equal to about 50 µm.

A solid cooling device 10 is implemented in between the first separation cyclone 2 and the other separation cyclone 6.

The fly ash and the combustion gases then enter the heat exchangers contained into back pass 11, downstream cyclones 2 and 6.

The solids leaving the first cyclone 2, consisting mainly of oxides, enter a seal pot 8 from which a first portion is fed to the first reactor 1 for reducing oxides and a second portion is fed to the separator 3 for separating of the carbon-containing residue. The seal pot can be fluidized by steam and/or recycled flue gas.

The separator 3 is fluidized by steam and/or recycled flue gas, which separates out the fine and light particles, such as the carbon-containing residue, which is fed to the first reactor 1 for reducing oxides, while the denser and larger oxides particles are fed to the second reactor 4 for oxidation. Preferably the solid separator 3 is of the type of separator described in patent document WO 2007/113016.

After oxidation in the second reactor 4 for oxidizing oxides, the oxides and the depleted air enter the cyclone 5, in which the solid oxides particles are separated from the gases, consisting essentially of N2 and 02.

The solid oxides particles extracted from the bottom of the second cyclone 5 enter a seal pot 9 from which a first portion is transferred to the bottom of the second reactor 4 for oxidizing oxides, a second portion is recirculated to the bottom of the first reactor 1 for reducing oxides and a third portion is sent to an external bed 7 fluidized by air where heat exchangers are implemented, and finally fed to the second reactor 4 for oxidizing oxides. The seal pot can be fluidized with compressed air. The complete cycle of the various reactions is described next.

The solid grounded fuel E1 is injected into the first reactor 1 for reducing oxides, which contains a circulating bed of oxides at a high temperature of 700°C to 1 150°C. According to the invention, it is preferably grounded coal with an average particle diameter equal to about 50 µm. The particle size range of the fuel avoids the accumulation of coarse ash at the bottom of the first reactor 1 for reducing oxides, that has to be extracted, and produces almost 100% fly ash. Therefore ash does not accumulate in the circulating bed of coarser oxides, which is collected by the first cyclone 2.

Metal oxides E2 are injected into the first reactor 1 for reducing oxides too. According to the invention, it is preferably metal oxides with an average particle diameter equal to or greater than 100 µm.

The volatile materials are released very quickly following heating of the fuel and react with the oxygen given off by the oxides to achieve partial combustion that continues with the combustion of the fixed carbon.

The solids are circulated after in the first separation cyclone 2 which has such efficiency that the average particle diameter of the solids escaping from this first separation cyclone is about equal 50 µm. These solids are mainly composed of carbonaceous residues.

This upper fraction of the solids which is constituted by carbon, is circulated into the other separation cyclone 6 installed in series with the first one 2, in order to separate the solids from the gases and to re-introduce the carbonaceous materials into the first reactor 1 for reducing oxides.

A first separation of the carbonaceous residues from the metal oxides is obtained by means of the series of the first cyclone 2 of low efficiency and the other separation cyclone 6.

The lower fraction of solids at the outlet of first cyclone 2 is extracted at the bottom of the seal pot 8 to be cleaned of the carbon-containing residues in the solid separator 3, and is then fed to the second reactor 4 for oxidizing oxides in order to be oxidized by the oxygen in the air atmosphere.

The oxides enter the second reactor 4 for oxidizing oxides, and regenerated after entering the second reactor 4 for oxidizing oxides are partly fed to the first reactor 1 for reducing oxides to start a new cycle of transport of oxygen from the second reactor 4 for oxidizing oxides to the first reactor 1 for reducing oxides. The quantity of oxides fed to the first reactor 1 for reducing oxides is controlled by a solids flow rate control valve (not shown).

The device can also be pressurized.

The oxygen depleted air is cooled in exchangers and de-dusted by a bag filter before it is discharged to the atmosphere.

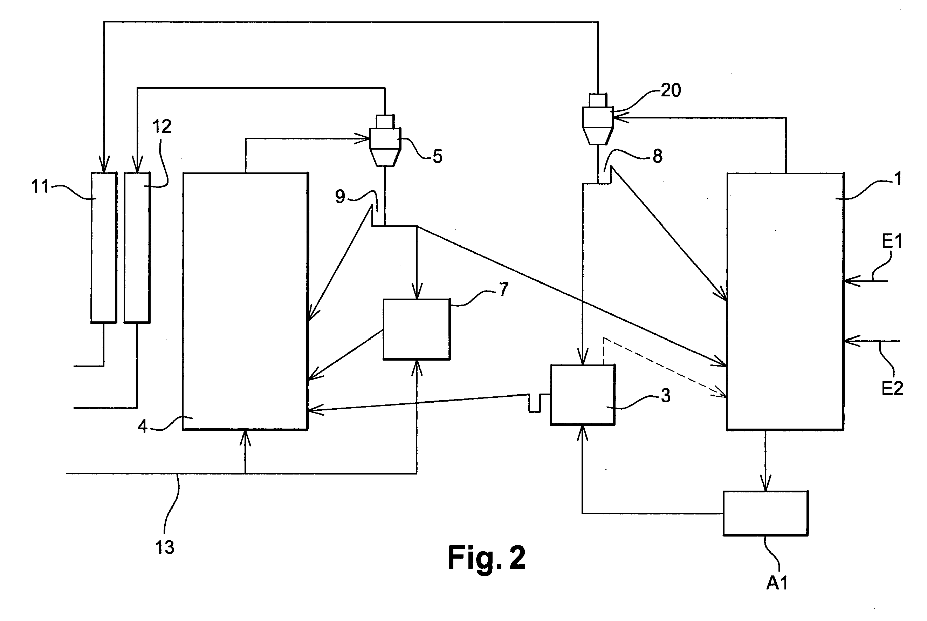

As shown on figure 2, a facility for combusting carbonaceous solid materials, in order to produce electricity and/or steam, according to the invention, in which circulates at least one oxide, preferably a mixture of oxides, advantageously metal oxides, which is reduced and then oxidized, includes a first reactor 1 for reducing oxides in which enter a grounded solid fuel material E1 and oxides E2 , a first separation cyclone 20 feeding with entrained solids from this reactor for reducing oxides, a carbon separator 3 installed at the outlet of this first cyclone in order to send the carbonaceous particles into the reactor for reducing oxides 1 and the oxides into a second reactor 4 for oxidizing oxides fluidized by air 13 and a second separation cyclone 5 feeding with entrained solids from the reactor for oxidizing oxides.

The facility comprises two back pass 11, 12, containing recovery exchangers for the flue gases and for the air, each dedicated to one of the reactors.

This facility is of the type of the known facility described in patent document FR 2 850 156.

According to the invention, the average particle diameter of the entering solid fuel material E1 controlled to be greater than the average particle diameter of the entering oxides E2, and more precisely the average particle diameter of the entering solid fuel material E1 is at least twice greater than the average particle diameter of the entering oxides E2.

The solid grounded fuel E1 is injected into the first reactor 1 for reducing oxides, which contains a circulating bed of oxides at a high temperature. According to the invention, it is preferably grounded coal with an average particle diameter equal to about 500 µm. The particle size range of the fuel assures the accumulation of solid fuel at the bottom of the first reactor 1 for reducing oxides and its greater residence time in this reactor 1 and the solids leaving the reactor are essentially constituted by oxides, which is collected in the conventional first cyclone 20.

The separation of the carbonaceous residues from the metal oxides is obtained conventionally by the arrangement of cyclone 20, seal pot 8 and finally solid separator 3, which receives a little rate of solid fuel and leading to a lower separation efficiency requirement.
By means of the invention, no carbon-containing residue is transferred into the second reactor 4 for oxidizing oxides. It is very important because such transfer would lead to the exothermic production of CO2, which would then be discharged to the atmosphere.

## Claims

1. Process for using a facility in which circulates at least one oxide, wherein said at least one oxide is reduced and then oxidized in each of both reactors (1,4), the facility including a reactor (1) for reducing oxide in which enter a grounded solid fuel material (E1) and oxide (E2), process **characterized in that** the facility comprises a lower efficiency cyclone device (2) receiving carbon entrained solids from the reactor (1) for reducing oxide, the upper fraction of the carbon solids at the finest particles outlet of the lower efficiency cyclone device (2) being circulated into a higher efficiency cyclone device (6), in order to separate the carbon solids from the gases and to re-introduce the carbonaceous materials into the reactor (1) for reducing oxide, a carbon separator (3) installed at the outlet of the lower efficiency separation cyclone device (2) in order to send the carbonaceous particles into the reactor (1) for reducing oxide and the oxide into a reactor (4) for oxidizing oxide, and a separation device (5) receiving entrained solids from the reactor (4) for oxidizing oxide, the average particle diameter of the entering solid fuel material (E1) being controlled to be at least twice smaller than the average particle diameter of the entering oxide (E2).

2. Process according to claim 1, **characterized in that** the solid fuel material (E1) is coal.

3. Process according to claim 1 or 2 **characterized in that** the oxide (E2) is metal oxide.

4. Process according to any of claims 1 to 3, **characterized in that** the average particle diameter of the entering solid fuel material (E1) is equal to about 50 µm.

5. Facility for implementing the process according to any of claims 1 to 4, comprising a reactor (1) for reducing oxide in which enter a grounded solid fuel material (E1) and oxide (E2), the facility being **characterized in that** it comprises a lower efficiency cyclone device (2) receiving carbon entrained solids from the reactor (1) for reducing oxide, the upper fraction of the carbon solids at the finest particles outlet of the lower efficiency cyclone device (2) being circulated into a higher efficiency cyclone device (6), in order to separate the solids from the gases and to re-introduce the carbonaceous materials into the reactor (1) for reducing oxide, a carbon separator (3) installed at the outlet of the lower efficiency cyclone device (2) in order to send the carbonaceous particles into the reactor (1) for reducing oxide and the oxide into a reactor (4) for oxidizing oxide and a separation device (5) receiving entrained solids from the reactor (4) for oxidizing oxide.

6. Facility according to claim 5, **characterized in that** the lower efficiency cyclone device (2) has such efficiency that the average particle diameter of the finest particles fraction escaping from the lower efficiency cyclone device (2) is about equal to said average particle diameter of the entering solid fuel material (E1).

7. Facility according to claim 5 or 6, **characterized in that** it comprises a solid cooling device (10) implemented in between the lower efficiency cyclone device (2) and the higher efficiency cyclone device (6).

## Patentansprüche

1. Verfahren zum Verwenden einer Anlage, in der wenigstens ein Oxid umläuft, wobei das wenigstens eine Oxid in den beiden jeweiligen Reaktoren (1, 4) reduziert und dann oxidiert wird, wobei die Anlage einen Reaktor (1) zum Reduzieren von Oxid umfasst, in den ein gemahlenes festes Brennstoffmaterial (E1) und Oxid (E2) eintritt, wobei das Verfahren **dadurch gekennzeichnet ist, dass** die Anlage eine Zykloneinheit (2) mit niedrigerer Effizienz umfasst, die Kohlenstoffmitgerissene Feststoffe aus dem Reaktor (1) zum Reduzieren von Oxid empfängt, wobei die obere Fraktion der Kohlenstoff-Feststoffe am Auslass für die feinsten Partikel der Zykloneinheit (2) mit niedriger Effizienz in eine Zyklonanlage (6) mit höherer Effizienz geleitet wird, um die Kohlenstoff-Feststoffe von den Gasen abzutrennen und die kohlenstoffhaltigen Materialien in den Reaktor (1) zum Reduzieren von Oxid zurückzuführen, eine Kohlenstoff-Trennanlage (3), die am Auslass der Zykloneinheit (2) mit niedrigerer Trennungseffizienz eingerichtet ist, um die kohlenstoffhaltigen Partikel in den Reaktor (1) zum Reduzieren von Oxid und das Oxid in einen Reaktor (4) zum Oxidieren von Oxid zu leiten, und eine Trenneinheit (5), die mitgerissene Feststoffe aus dem Reaktor (4) zum Oxidieren von Oxid empfängt, wobei der mittlere Partikeldurchmesser des eintretenden festen Brennstoffmaterials (E1) so gesteuert ist, dass er wenigstens zweimal kleiner als der mittlere Partikeldurchmesser des eintretenden Oxids (E2) ist.

2. Verfahren gemäß Anspruch 1, **dadurch gekennzeichnet, dass** das feste Brennstoffmaterial (E1) Kohle ist.

3. Verfahren gemäß Anspruch 1 oder 2, **dadurch gekennzeichnet, dass** das Oxid (E2) Metalloxid ist.

4. Verfahren gemäß einem der Ansprüche 1 bis 3, **dadurch gekennzeichnet, dass** der mittlere Partikeldurchmesser des eintretenden festen Brennstoffmaterials (E1) gleich etwa 50 µm ist.

5. Anlage zum Umsetzen des Verfahrens gemäß einem der Ansprüche 1 bis 4, umfassend einen Reaktor (1) zum Reduzieren von Oxid, in den ein gemahlenes festes Brennstoffmaterial (E1) und ein Oxid (E2) eintritt, wobei die Anlage **dadurch gekennzeichnet ist, dass** sie eine Zykloneinheit (2) mit niedrigerer Effizienz umfasst, die Kohlenstoffmitgerissene Feststoffe aus dem Reaktor (1) zum Reduzieren von Oxid empfängt, wobei die obere Fraktion der Kohlenstoff-Feststoffe am Auslass für die feinsten Partikel der Zykloneinheit (2) mit niedriger Effizienz in eine Zyklonanlage (6) mit höherer Effizienz geleitet wird, um die Feststoffe von den Gasen abzutrennen und die kohlenstoffhaltigen Materialien in den Reaktor (1) zum Reduzieren von Oxid zurückzuführen, eine Kohlenstoff-Trennanlage (3), die am Auslass der Zykloneinheit (2) mit niedrigerer Trennungseffizienz eingerichtet ist, um die kohlenstoffhaltigen Partikel in den Reaktor (1) zum Reduzieren von Oxid und das Oxid in einen Reaktor (4) zum Oxidieren von Oxid zu leiten, und eine Trenneinheit (5), die mitgerissene Feststoffe aus dem Reaktor (4) zum Oxidieren von Oxid empfängt.

6. Anlage gemäß Anspruch 5, **dadurch gekennzeichnet, dass** die Zykloneinheit (2) mit niedrigerer Effizienz eine derartige Effizienz aufweist, dass der mittlere Partikeldurchmesser der feinsten Partikelfraktion, die aus der Zykloneinheit (2) mit niedrigerer Effizienz austritt, etwa gleich dem mittleren Partikeldurchmesser des eintretenden festen Brennstoffmaterials (E1) ist.

7. Anlage gemäß Anspruch 5 oder 6, **dadurch gekennzeichnet, dass** sie eine Feststoff-Kühleinheit (10) umfasst, die zwischen der Zykloneinheit (2) mit niedrigerer Effizienz und der Zykloneinheit (6) mit höherer Effizienz eingerichtet ist.

## Revendications

1. Procédé d'utilisation d'une installation dans laquelle circule au moins un oxyde, ledit au moins un oxyde étant réduit puis oxydé dans chacun de deux réacteurs (1, 4), l'installation comportant un réacteur (1) pour réduire l'oxyde dans lequel pénètrent un matériau combustible solide broyé (E1) et un oxyde (E2), procédé **caractérisé en ce que** l'installation comprend un dispositif cyclone d'efficacité inférieure (2) recevant des matières solides carbonées entraînées issues du réacteur (1) pour réduire l'oxyde, la fraction supérieure des matières solides carbonées à la sortie des particules les plus fines du dispositif cyclone d'efficacité inférieure (2) étant mise en circulation dans un dispositif cyclone d'efficacité supérieure (6), afin de séparer les matières solides carbonées des gaz et de réintroduire les matières carbonées dans le réacteur (1) pour réduire l'oxyde, un séparateur de carbone (3) installé à la sortie du dispositif de séparation cyclone d'efficacité inférieure (2) afin d'envoyer les particules carbonées dans le réacteur (1) pour réduire l'oxyde et l'oxyde dans un réacteur (4) pour oxyder l'oxyde, et un dispositif de séparation (5) recevant les matières solides entraînées issues du réacteur (4) pour oxyder l'oxyde, le diamètre moyen de particules du matériau combustible solide entrant (E1) étant contrôlé pour être au moins deux fois plus petit que le diamètre moyen de particules de l'oxyde entrant (E2).

2. Procédé selon la revendication 1, **caractérisé en ce que** le matériau combustible solide (E1) est du charbon.

3. Procédé selon la revendication 1 ou 2, **caractérisé en ce que** l'oxyde (E2) est un oxyde métallique.

4. Procédé selon l'une quelconque des revendications 1 à 3, **caractérisé en ce que** le diamètre moyen de particules du matériau combustible solide entrant (E1) est égal à environ 50 µm.

5. Installation pour mettre en oeuvre le procédé selon l'une quelconque des revendications 1 à 4, comprenant un réacteur (1) pour réduire un oxyde dans lequel pénètrent un matériau combustible solide broyé (E1) et un oxyde (E2), l'installation étant **caractérisée en ce qu'**elle comprend un dispositif cyclone d'efficacité inférieure (2) recevant des matières solides carbonées entraînées issues du réacteur (1) pour réduire l'oxyde, la fraction supérieure des matières solides carbonées à la sortie des particules les plus fines du dispositif cyclone d'efficacité inférieure (2) étant mise en circulation dans un dispositif cyclone d'efficacité supérieure (6), afin de séparer les matières solides des gaz et de réintroduire les matières carbonées dans le réacteur (1) pour réduire l'oxyde, un séparateur de carbone (3) installé à la sortie du dispositif cyclone d'efficacité inférieure (2) afin d'envoyer les particules carbonées dans le réacteur (1) pour réduire l'oxyde et l'oxyde dans un réacteur (4) pour oxyder l'oxyde, et un dispositif de séparation (5) recevant les matières solides entraînées issues du réacteur (4) pour oxyder l'oxyde.

6. Installation selon la revendication 5, **caractérisée en ce que** le dispositif cyclone d'efficacité inférieure (2) a une efficacité telle que le diamètre moyen de particules de la fraction des particules les plus fines s'échappant du dispositif cyclone d'efficacité inférieure (2) est approximativement égal audit diamètre moyen de particules du matériau combustible solide entrant (E1).

7. Installation selon la revendication 5 ou 6, **caractérisée en ce qu'**elle comprend un dispositif de refroidissement de matières solides (10) disposé entre le dispositif cyclone d'efficacité inférieure (2) et le dispositif cyclone d'efficacité supérieure (6).
